# FASCICULE DE BREVET EUROPEEN

(11) **EP 3 900 409 B1**
(45) Date de publication et mention de la délivrance du brevet: **08.05.2024**
(21) Numéro de dépôt: 19839357.1
(22) Date de dépôt: 04.12.2019
(51) Int. Cl.: B60W 50/14, B60W 60/00, H04W 4/40

(54) **PROCÉDÉ, PROGRAMME D'ORDINATEUR ET DISPOSITIF DE CONFIGURATION D'UNE CONNEXION RADIO**
VERFAHREN, COMPUTERPROGRAMM UND GERÄT ZUM KONFIGURIEREN EINER FUNKVERBINDUNG
METHOD, COMPUTER PROGRAM AND DEVICE FOR CONFIGURING A RADIO CONNECTION

(30) Priorité: 17.12.2018 FR 1873029
(43) Date de publication de la demande: 27.10.2021
(73) Titulaire: Stellantis Auto SAS, 78300 Poissy (FR)
(72) Inventeur: GIROD A PETIT LOUIS, Adrien, 78960 VOISINS LE BRETONNEUX (FR); RONDEL, Jeremie, 78760 JOUARS-PONTCHARTRAIN (FR)
(86) Numéro de dépôt international: PCT/FR2019/052910
(87) Numéro de publication internationale: WO 2020/128198

(56) Documents cités:
- WO-A1-2017/118789
- FR-A1- 3 041 917

## Description

### Domaine technique de l'invention

L'invention concerne les systèmes d'assistance au conducteur et plus particulièrement pour les conducteurs communiquant avec un interlocuteur distant lors d'une phase de conduite autonome d'un véhicule.

### Etat de la technique

Les systèmes d'assistance à la conduite sont désormais largement répandus dans les véhicules automobiles récents et connaissent un développement rapide.

On connaît par exemple des assistants de conduite en embouteillage (plus connus sous l'acronyme anglais TJC pour « Traffic Jam Chauffeur ») destinés à soulager le conducteur dans des situations de trafic dense ou de bouchon (vitesse inférieure à 50/70 km/h) sur des routes à chaussées séparées (autoroutes et voies rapides). Ces derniers sont capables de réguler automatiquement la vitesse jusqu'à l'arrêt afin de maintenir une distance voulue avec le véhicule précédant tout en assurant le contrôle de la direction, de sorte que le conducteur peut lâcher le volant et les pédales pour vaquer à d'autres activités.

Le conducteur est alors libre de communiquer, en particulier téléphoner, avec des interlocuteurs distants lors des phases de conduites autonomes.

On connait par le document DE102009054100 un système de contrôle de la disponibilité d'un dispositif de communication sans fil dans un véhicule. Le dispositif de communication est disponible quand le système d'aide à la conduite (autonome) du véhicule est actif. Le système permet d'enclencher le système d'aide à la conduite lorsque qu'une communication démarre avec le dispositif de communication sans fil. Cependant dans ce système rien n'est prévu lorsque le système d'aide à la conduite n'est plus disponible.

On connait aussi par le document FR3041917 un procédé adaptatif d'assistance à la reprise en main d'un véhicule automobile au terme d'une phase de conduite automatisée, On connait aussi par le document WO 2017/118789 un procédé de pilotage d'un système automatisé d'assistance à la conduite proposant un premier mode de conduite automatisée à désengagement au terme d'une première phase de transition et un deuxième mode de conduite automatisée à désengagement au terme d'une seconde phase de transition plus courte.

### Exposé de l'invention

L'invention a pour objet d'améliorer la situation. Elle propose plus précisément à cet effet un procédé d'assistance d'un conducteur d'un véhicule comportant un système d'assistance à la conduite, comprenant un premier mode de conduite autonome activé, caractérisé en ce qu'il comporte d'étapes de :
- détection d'une communication en cours du conducteur,
- détection d'une future désactivation du premier mode autonome,
- émission d'une première alerte à destination du conducteur de façon à le prévenir de la future désactivation du premier mode autonome.

L'invention permet signaler au conducteur que sa communication sera bientôt interrompue. Celui peut donc anticiper cette interruption et terminer sa conversation.

Avantageusement, l'étape de détection de la future désactivation comporte la détermination d'une durée à l'issue de laquelle le dit premier mode autonome sera désactivé et en ce que l'alerte, émise lors de l'étape d'émission indique au conducteur la durée déterminée.

Selon la présente invention, le conducteur étant en communication avec un interlocuteur, ledit procédé d'assistance d'un conducteur d'un véhicule selon l'invention comporte en outre une étape d'émission d'une deuxième alerte à destination dudit interlocuteur

Avantageusement, la deuxième alerte, émise lors de l'étape d'émission, indique à l'interlocuteur la durée déterminée.

Avantageusement, le procédé d'assistance d'un conducteur d'un véhicule selon l'invention comprend en outre une étape d'activation d'un deuxième mode de conduite et une étape d'émission d'une troisième alerte à destination de l'interlocuteur, de façon à signifier à l'interlocuteur la fin de la communication avec le conducteur.

Avantageusement, le procédé d'assistance d'un conducteur d'un véhicule selon l'invention comprend en outre une étape d'activation d'un enregistreur de façon à permettre à l'interlocuteur d'enregistrer un message à destination du conducteur.

Avantageusement, le procédé d'assistance d'un conducteur d'un véhicule selon l'invention comprend en outre des étapes de :
- détermination d'une future activation du premier mode d'assistance,
- émission d'une alerte à destination de l'interlocuteur d'une prochaine disponibilité du conducteur pour une communication.

L'invention concerne aussi un programme d'ordinateur comportant des instructions pour mettre en oeuvre le procédé d'assistance d'un conducteur d'un véhicule selon l'invention, lorsqu'il est exécuté sur un ou plusieurs processeurs.

L'invention concerne aussi un dispositif d'assistance d'un conducteur d'un véhicule, comportant au moins un processeur et une mémoire caractérisé en ce qu'il est configuré pour mettre en oeuvre le procédé d'assistance d'un conducteur d'un véhicule selon l'invention.

L'invention concerne aussi un véhicule caractérisé en ce qu'il comporte un dispositif selon l'invention.

### Brève description des figures

[Fig 1] représente dispositif d'assistance selon l'invention
[Fig 2] montre un logigramme représentant le procédé selon l'invention

### Description détaillée de l'invention

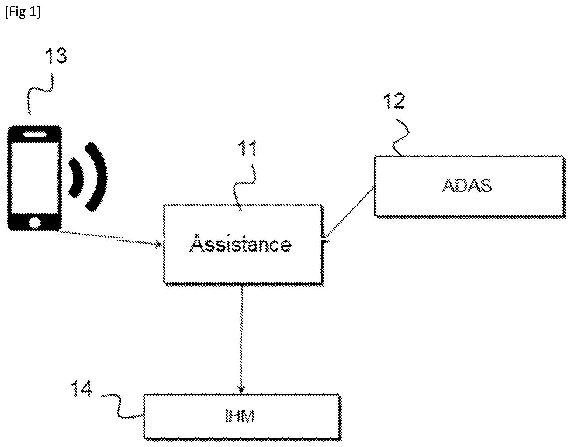

En référence à la figure 1, le dispositif d'assistance 11 communique, d'une part, avec un système de conduite automatisé 12 et, d'autre part, avec un module de communication 13. Le dispositif d'assistance est en outre configuré pour commander une interface homme machine (IHM) 14 du véhicule.

Le système de conduite automatisé 12 comporte par exemple un module d'évaluation du contexte de conduite, une unité de pilotage, un module d'actionnement des modes d'assistance à la conduite, ainsi qu'un module d'information et d'avertissement.

Le module d'évaluation du contexte de conduite comprend par exemple une caméra par exemple de type CCD (pour « Capteurs à Couplage de Charges ») orientée vers l'avant du véhicule et délivrant des images permettant de déterminer le type de route empruntée (autoroute, voie rapide ou bien route secondaire) à partir de certains paramètres caractéristiques tels que la largeur de la voie, le marquage au sol (couleur, largeur et espacement des lignes) et la présence éventuelle d'une barrière ou d'un terre-plein central de séparation entre les deux sens de circulation. L'analyse des images fournies par cette caméra permet en outre d'établir le niveau de fluidité du trafic routier.

Le module comporte également une pluralité de capteurs mesurant certains paramètres internes de conduite tels que la vitesse instantanée du véhicule et l'angle de braquage du volant.

Les données recueillies par le module et d'évaluation du contexte de conduite sont acheminés en temps réel vers l'unité de pilotage à laquelle ce module est relié.

L'unité de pilotage, comporte un calculateur ainsi qu'un module de stockage comprenant de la mémoire non volatile de type EEPROM ou FLASH et de la mémoire vive.

L'unité de pilotage est reliée au module d'actionnement auquel elle est apte à transmettre l'ordre d'activer ou de désactiver l'un des modes d'assistance à la conduite.

Ce module d'actionnement comporte une pluralité d'actionneurs aptes à contrôler certains organes du véhicule tels que la direction, l'accélération, le freinage et la boîte de vitesse pour assurer la mise en oeuvre des différents modes d'assistance à la conduite dont est doté le véhicule, par exemple :
- Un premier mode d'assistance, par exemple pour la conduite en embouteillage, assurant à la fois le contrôle du déplacement latéral et longitudinal du véhicule dans des situations de trafic dense ou de bouchon (vitesse inférieure à une valeur seuil prédéterminée comprise par exemple entre 50 et 70 km/h) et sur des routes à chaussées séparées et dans lequel conducteur n'est pas tenu de garder les yeux fixés sur la route et peut vaquer à d'autres occupations car le guidage peut être maintenu sur une période de quelques secondes (comprise par exemple entre 5 et 15 s) en cas de perte d'information (désengagement avec transition normale),
- un deuxième mode d'assistance dans lequel le véhicule ne contrôle ni le déplacement longitudinal, ni le déplacement latéral du véhicule.

Le module de communication 13 est un moyen technique permettant au conducteur de communiquer avec un interlocuteur situé à distance du véhicule. Il s'agit par exemple d'un téléphone mobile connecté au véhicule par l'intermédiaire d'une liaison filaire (par exemple de type USB) ou d'une liaison non filaire (par exemple bluetooth ou wifi), de façon notamment à signaler au véhicule si une communication est en cours.

Mais le module de communication 13 peut aussi être une application de communication textuelle (par exemple SMS ou mail) ou vocale (application d'appel vocal et éventuellement vidéo) hébergé sur un dispositif nomade connecté au véhicule ou hébergé directement sur un calculateur du véhicule.

L'IHM 14 comporte par exemple un premier écran d'information intégré à la console centrale de la planche de bord du véhicule (ce dernier étant constitué de préférence par l'écran d'affichage du dispositif d'info-divertissement) et apte à diffuser des messages visuels indiquant la ou les tâches de conduites évoluant lors d'une transition d'un mode autonome à un autre.

L'IHM 14 comprend également de préférence un second écran d'avertissement intégré au combiné d'instruments du véhicule et destiné à afficher des messages visuels.

L'IHM 14 est également de préférence doté d'une sirène apte à émettre un signal acoustique d'alerte.

L'IHM 14 permet notamment de signaler au conducteur qu'il va devoir bientôt reprendre en main le véhicule, à l'issue du mode autonome et que par conséquent sa communication sera bientôt interrompue.

Le dispositif d'assistance 11 d'un conducteur comporte par exemple un calculateur comportant au moins un processeur et au moins une mémoire.

Le dispositif d'assistance 11 est configuré pour mettre en oeuvre le procédé d'assistance d'un conducteur d'un véhicule selon l'invention et décrit ci-après.

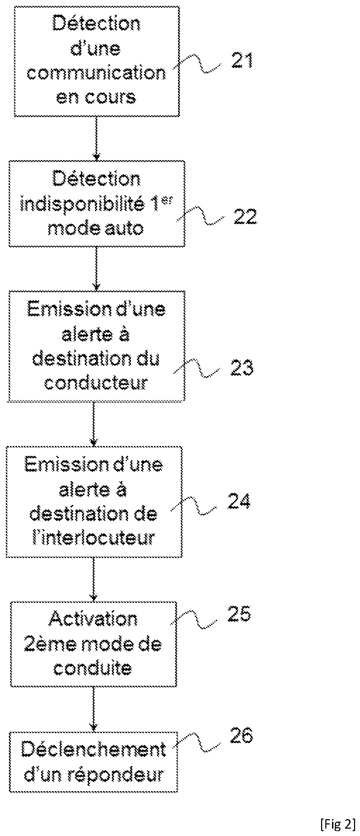

On va maintenant décrire en détails et à l'appui de l'organigramme de la figure 2, les différentes étapes du procédé selon l'invention.

Le procédé d'assistance d'un conducteur d'un véhicule comporte une étape de détection 21 d'une communication en cours du conducteur. Cette détection est réalisée par exemple par la réception d'un signal provenant du module de communication 13 et indiquant qu'une communication est en cours.

Le procédé d'assistance d'un conducteur d'un véhicule comporte en outre une étape de détection 22 d'une future désactivation du premier mode autonome. Cette détection est réalisée par exemple par la réception d'un signal provenant un système de conduite automatisé 12.

Au cours de cette étape, l'unité de pilotage détermine, à l'aide des données transmises par le module d'évaluation du contexte de conduite, le ou les modes d'assistance à la conduite pouvant être activés dans un future proche.

Une future désactivation du premier mode autonome peut être due à une future non disponibilité du premier mode (liée par exemple à un disfonctionnement ou à un changement de contexte de conduite) ou une future disponibilité d'un deuxième mode autonome assurant plus de tâches de conduite.

Par exemple, on suppose que le véhicule circule sur une portion d'autoroute embouteillée et roule à vitesse réduite (40 km/h), l'unité de pilotage a activé le premier mode d'assistance (assistance à la conduite en embouteillage).

On suppose que le véhicule arrive sur une voie rapide sur laquelle le trafic est fluide, l'unité de pilotage va activer le deuxième mode (mode manuel).

Le deuxième mode (mode manuel) n'assure ni le contrôle latéral, ni le contrôle longitudinal du véhicule. Une attention totale du conducteur est donc requise. Le conducteur n'est alors pas autorisé à utiliser un moyen de communication.

Le premier mode d'assistance (assistance à la conduite en embouteillage) le contrôle latéral et longitudinal du véhicule mais sans tâche de surveillance de la route de la part du conducteur. Le conducteur peut alors communiquer avec un interlocuteur par exemple par le biais d'une conversation téléphonique.

Le procédé d'assistance d'un conducteur d'un véhicule comporte en outre une étape d'émission 23 d'une première alerte à destination du conducteur de façon à le prévenir de la future désactivation du premier mode autonome.

De façon avantageuse, l'étape de détection 21 de la future désactivation comporte la détermination d'une durée D à l'issue de laquelle ledit premier mode autonome sera désactivé et en ce que l'alerte, émise lors de l'étape d'émission 23 indique au conducteur la durée D déterminée.

Par exemple, dans le cas où on suppose que le véhicule circule sur une portion d'autoroute embouteillée et roule à vitesse réduite (40 km/h) et qu'il arrive sur une voie rapide sur laquelle le trafic est fluide, le système automatisé est adapté pour déterminer à l'avance à quelle échéance le contexte de conduite va évoluer de façon à préparer le conducteur à une transition entre deux modes de conduites. L'information de durée D déterminé par le système automatisé 12 est transmise au module d'assistance 11.

De façon avantageuse, l'étape de détection 21 de la future désactivation comporte en outre une étape d'émission 24 d'une deuxième alerte à destination de l'interlocuteur.

De façon avantageuse, la deuxième alerte, émise lors de l'étape d'émission 24, indique à l'interlocuteur la durée D déterminée.

Avantageusement, le procédé d'assistance d'un conducteur d'un véhicule comporte en outre une étape d'activation 25 d'un deuxième de conduite (mode manuel) et une étape d'émission d'une troisième alerte à destination de l'interlocuteur, de façon à signifier à l'interlocuteur la fin de la communication avec le conducteur.

Ainsi lorsque le conducteur passe en conduite manuel, la communication est interrompue et un message ou un signal sonore est adressé à l'interlocuteur.

Avantageusement, le procédé d'assistance d'un conducteur d'un véhicule comporte en outre une étape d'activation 26 d'un enregistreur de façon à permettre à l'interlocuteur d'enregistrer un message à destination du conducteur.

Avantageusement, le procédé d'assistance d'un conducteur d'un véhicule comporte en outre des étapes de :
- détermination d'une future activation du premier mode d'assistance,
- émission d'une alerte à destination de l'interlocuteur d'une prochaine disponibilité du conducteur pour une communication.

Dans le cas où le système de conduite automatisé 12 détermine une prochaine phase de conduite autonome, cette information peut être communiquée à l'interlocuteur dont la communication a été interrompue, de façon à lui signaler une prochaine disponibilité du conducteur.

## Revendications

1. Procédé d'assistance d'un conducteur d'un véhicule comportant un système d'assistance à la conduite, comprenant un premier mode de conduite autonome activé, comportant des étapes de :
- détection (21) d'une communication en cours du conducteur,
- détection (22) d'une future désactivation du premier mode autonome,
- émission (23) d'une première alerte à destination du conducteur de façon à le prévenir de la future désactivation du premier mode autonome,
**caractérisé en ce que** le conducteur étant en communication avec un interlocuteur, ledit procédé comporte en outre une étape d'émission (24) d'une deuxième alerte à destination dudit interlocuteur.

2. Procédé d'assistance d'un conducteur d'un véhicule selon la revendication 1, **caractérisé en ce que** l'étape de détection (21) de la future désactivation comporte la détermination d'une durée (D) à l'issue de laquelle le dit premier mode autonome sera désactivé et **en ce que** l'alerte, émise lors de l'étape d'émission (23) indique au conducteur la durée (D) déterminée.

3. Procédé d'assistance d'un conducteur d'un véhicule selon la revendication 2, **caractérisé en ce que** la deuxième alerte, émise lors de l'étape d'émission (24), indique à l'interlocuteur la durée (D) déterminée

4. Procédé d'assistance d'un conducteur d'un véhicule selon l'une des revendications 2 ou 3, **caractérisé en ce qu'**il comprend en outre une étape d'activation (25) d'un deuxième mode de conduite et une étape d'émission d'une troisième alerte à destination de l'interlocuteur, de façon à signifier à l'interlocuteur la fin de la communication avec le conducteur

5. Procédé d'assistance d'un conducteur d'un véhicule selon la revendication précédente, **caractérisé en ce qu'**il comprend en outre une étape d'activation (26) d'un enregistreur de façon à permettre à l'interlocuteur d'enregistrer un message à destination du conducteur.

6. Procédé d'assistance d'un conducteur d'un véhicule selon l'une des revendications précédentes, **caractérisé en ce qu'**il comporte en outre des étapes de :
- détermination d'une future activation du premier mode de conduite,
- émission d'une alerte à destination de l'interlocuteur d'une prochaine disponibilité du conducteur pour une communication.

7. Programme d'ordinateur comportant des instructions pour mettre en oeuvre le procédé d'assistance d'un conducteur d'un véhicule selon l'une des revendications précédentes, lorsqu'il est exécuté sur un ou plusieurs processeurs.

8. Dispositif d'assistance d'un conducteur d'un véhicule, comportant au moins un processeur et une mémoire **caractérisé en ce qu'**il est configuré pour mettre en oeuvre le procédé d'assistance d'un conducteur d'un véhicule selon l'une des revendications 1 à 6.

9. Véhicule **caractérisé en ce qu'**il comporte un dispositif selon la revendication précédente.

## Patentansprüche

1. Verfahren zur Unterstützung eines Fahrers eines Fahrzeugs, umfassend ein Fahrassistenzsystem, umfassend einen ersten aktivierten autonomen Fahrmodus, umfassend die Schritte:
- Erkennen (21) einer laufenden Kommunikation durch den Fahrer,
- Erkennen (22) einer zukünftigen Deaktivierung des ersten autonomen Modus,
- Aussenden (23) einer ersten Warnung an den Fahrer, um ihn vor der zukünftigen Deaktivierung des ersten autonomen Modus zu warnen, **dadurch gekennzeichnet, dass** der Fahrer mit einem Gesprächspartner kommuniziert, wobei das Verfahren außerdem einen Schritt der Übermittlung (24) umfasst. einer zweiten Benachrichtigung an den Gesprächspartner.

2. Verfahren zur Unterstützung eines Fahrers eines Fahrzeugs nach Anspruch 1, **dadurch gekennzeichnet, dass** der Schritt des Erkennens (21) der zukünftigen Deaktivierung die Bestimmung einer Dauer (D) umfasst, nach deren Ende der erste autonome Modus deaktiviert wird und in dass der während des Übertragungsschritts (23) ausgegebene Alarm dem Fahrer die ermittelte Dauer (D) anzeigt.

3. Verfahren zur Unterstützung eines Fahrers eines Fahrzeugs nach Anspruch 2, **dadurch gekennzeichnet, dass** der zweite Alarm, der während des Übertragungsschritts (24) ausgegeben wird, dem Gesprächspartner die bestimmte Dauer (D) anzeigt.

4. Verfahren zur Unterstützung eines Fahrers eines Fahrzeugs nach einem der Ansprüche 2 oder 3, **dadurch gekennzeichnet, dass** es außerdem einen Schritt des Aktivierens (25) eines zweiten Fahrmodus und einen Schritt des Aussendens einer dritten Warnung an den Gesprächspartner umfasst, um so Benachrichtigen Sie den Gesprächspartner über das Ende der Kommunikation mit dem Fahrer.

5. Verfahren zur Unterstützung eines Fahrers eines Fahrzeugs nach dem vorhergehenden Anspruch, **dadurch gekennzeichnet, dass** es außerdem einen Schritt der Aktivierung (26) eines Rekorders umfasst, um es dem Gesprächspartner zu ermöglichen, eine Nachricht an den Fahrer aufzuzeichnen.

6. Verfahren zur Unterstützung eines Fahrers eines Fahrzeugs nach einem der vorhergehenden Ansprüche, **dadurch gekennzeichnet, dass** es außerdem folgende Schritte umfasst:
- Bestimmung einer zukünftigen Aktivierung des ersten Fahrmodus,
- Ausgabe einer Warnung an den Gesprächspartner über die bevorstehende Verfügbarkeit des Fahrers Für die Kommunikation.

7. Computerprogramm, das Anweisungen zur Implementierung des Verfahrens zur Unterstützung eines Fahrers eines Fahrzeugs nach einem der vorhergehenden Ansprüche umfasst, wenn es auf einem oder mehreren Prozessoren ausgeführt wird.

8. Vorrichtung zur Unterstützung eines Fahrers eines Fahrzeugs, umfassend mindestens einen Prozessor und einen Speicher, **dadurch gekennzeichnet, dass** sie zur Durchführung des Verfahrens zur Unterstützung eines Fahrers eines Fahrzeugs nach einem der Ansprüche 1 bis 6 konfiguriert ist.

9. Fahrzeug **dadurch gekennzeichnet, dass** es eine Vorrichtung gemäß dem vorhergehenden Anspruch umfasst.

## Claims

1. Method of assisting a driver of a vehicle comprising a driving assistance system, comprising a first activated autonomous driving mode, comprising steps of:
- detection (21) of a communication in progress by the driver,
- detection (22) of a future deactivation of the first autonomous mode,
- emission (23) of a first alert to the driver so as to warn him of the future deactivation of the first autonomous mode,
**characterized in that** the driver being in communication with an interlocutor, said method further comprises a step of transmission (24) of a second alert to said interlocutor.

2. Method of assisting a driver of a vehicle according to claim 1, **characterized in that** the step of detecting (21) the future deactivation comprises the determination of a duration (D) at the end of which the said first autonomous mode will be deactivated and **in that** the alert, emitted during the transmission step (23) indicates to the driver the determined duration (D).

3. Method of assisting a driver of a vehicle according to claim 2, **characterized in that** the second alert, emitted during the transmission step (24), indicates to the interlocutor the determined duration (D).

4. Method of assisting a driver of a vehicle according to one of claims 2 or 3, **characterized in that** it further comprises a step of activating (25) a second driving mode and a step of emission of a third alert to the interlocutor, so as to notify the interlocutor of the end of communication with the driver.

5. Method of assisting a driver of a vehicle according to the preceding claim, **characterized in that** it further comprises a step of activating (26) a recorder so as to allow the interlocutor to record a message to the driver.

6. Method of assisting a driver of a vehicle according to one of the preceding claims, **characterized in that** it further comprises steps of:
- determination of a future activation of the first driving mode,
- emission of an alert to the interlocutor of the driver's upcoming availability for communication.

7. Computer program comprising instructions for implementing the method of assisting a driver of a vehicle according to one of the preceding claims, when executed on one or more processors.

8. Device for assisting a driver of a vehicle, comprising at least one processor and a memory **characterized in that** it is configured to implement the method for assisting a driver of a vehicle according to one of claims 1 to 6.

9. Vehicle **characterized in that** it comprises a device according to the preceding claim.
